# EUROPÄISCHE PATENTSCHRIFT

(11) **EP 3 881 799 B1**
(45) Veröffentlichungstag und Bekanntmachung des Hinweises auf die Patenterteilung: **13.12.2023**
(21) Anmeldenummer: 21153955.6
(22) Anmeldetag: 28.01.2021
(51) Int. Cl.: A61C 19/10, A61C 9/00, G06Q 30/06, A61C 13/08

(54) **SYSTEM UND VERFAHREN ZUR BEREITSTELLUNG KÜNSTLICHER ZAHNELEMENTE**
SYSTEM AND METHOD FOR PROVIDING ARTIFICIAL TOOTH ELEMENTS
SYSTÈME ET PROCÉDÉ DE FOURNITURE DES ÉLÉMENTS DENTAIRES ARTIFICIELS

(30) Priorität: 16.03.2020 DE 102020107104
(43) Veröffentlichungstag der Anmeldung: 22.09.2021
(73) Patentinhaber: Vita Zahnfabrik H. Rauter GmbH & Co. KG, 79713 Bad Säckingen (DE)
(72) Erfinder: Rauh, Wolfgang, 79713 Bad Säckingen (DE)
(74) Vertreter: dompatent von Kreisler Selting Werner - Partnerschaft von Patent- und Rechtsanwälten mbB

(56) Entgegenhaltungen:
- EP-A1- 1 243 233
- WO-A2-2009/046710
- DE-A1-102014 216 966

## Beschreibung

Die Erfindung betrifft ein System sowie ein Verfahren zur Bereitstellung künstlicher Zahnelemente.

Künstliche Zahnelemente werden dem Zahnarzt oder dem Zahntechniker in Garnituren zur Verfügung gestellt. Eine Garnitur für Frontzähne enthält hierbei üblicherweise sechs Zahnelement und eine Garnitur für Seitenzähne sieben Zahnelemente. Jede Garnitur weist Zahnelemente mit identischer Farbe, identischem Corona und identischer Helligkeit auf. Da auf Grund der Vielzahl unterschiedlicher Zahngarnituren nicht sämtliche Zahnelemente einer Zahngarnitur verwendet werden, werden angebrochene Zahngarnituren vom Zahntechniker oder Zahnarzt an den Hersteller zurückgesendet. Vom Hersteller erhält der Kunde, d.h. der Zahnarzt oder der Zahntechniker, eine Gutschrift für die zurückgesendeten Zahnelemente. Der Hersteller der Zahnelemente muss die in den Garnituren verbliebenen Zahnelemente aus den Garnituren herausnehmen und reinigen, so dass diese wieder neuen Zahngarnituren zugeführt werden können. Dies ist ein äußerst aufwändiges Verfahren, das insbesondere viel Handarbeit erfordert. Alternativ könnten unvollständige Zahngarnituren entsorgt werden. Dies ist auf Grund des Wertes der einzelnen Zahnelemente unwirtschaftlich bzw. mit hohen Kosten verbunden.

Aus EP 1 243 233 ist ein Lagersystem für Zahngarnituren bekannt. Hierbei wird insbesondere auf einer Haube eines eine Zahngarnitur aufweisenden Behälters ein Barcode vorgesehen. Dieser kann beim Einlagern sowie auch beim Auslagern der Zahngarnitur gescannt werden.

Aufgabe der Erfindung ist es, ein System und/oder ein Verfahren zur Bereitstellung künstlicher Zahnelemente zu schaffen, mit dem das Auffüllen unvollständiger Zahngarnituren vereinfacht ist.

Die Lösung der Aufgabe erfolgt erfindungsgemäß durch ein System mit den Merkmalen des Anspruchs 1 bzw. ein Verfahren mit den Merkmalen des Anspruchs 6.

Das erfindungsgemäße System zur Bereitstellung künstlicher Zahnelemente weist eine Erfassungseinrichtung zur bildlichen/visuellen Erfassung zumindest einer unvollständigen Zahngarnitur auf. Von der Erfassungseinrichtung wird ein Bild der Zahngarnitur erzeugt. Bevorzugt ist es hierbei, dass das Bild von der Zahngarnitur unmittelbar in der Zahnarztpraxis bzw. beim Zahntechniker erzeugt wird. Hierdurch entfällt die Notwendigkeit des Zurücksendens der angebrochenen Zahngarnitur zum Hersteller. Alternativ könnte jedoch auch weiterhin die Zahngarnitur zum Hersteller zurückgesandt und das entsprechende Bild beim Hersteller erzeugt werden.

Des Weiteren weist das erfindungsgemäße System eine Bildauswerteeinrichtung zur Bestimmung der Art der Zahngarnitur auf. Mit Hilfe der Bildauswerteeinrichtung erfolgt in besonders bevorzugter Ausführungsform ein automatisches Bestimmen der Zahngarnitur. Dies kann beispielsweise durch Texterkennung von Texten, die sich auf der Schachtel der Zahngarnitur befinden, erfolgen. Auch könnte ein entsprechender QR-Code oder ein Barcode automatisch erkannt bzw. ausgelesen werden. Des Weiteren ist es durch geeignete Bildauswerteeinrichtungen alternativ möglich, die Art der Zahngarnitur durch die Zahnform und/oder die Farbe der Zahnelemente zu bestimmen.

Ferner erfolgt durch die Bildauswerteeinrichtung ein Bestimmen des mindestens einen fehlenden Zahnelements. Dies kann wiederum durch entsprechende Bildauswertung erfolgen. Hierzu kann dieselbe Bildauswerteeinrichtung verwendet werden, die zur Bestimmung der Art der Zahngarnitur verwendet wird. Alternativ kann das System auch eine zweite, sich von der ersten unterscheidende Bildauswerteeinrichtung aufweisen.

Durch das erfindungsgemäße System zur Bereitstellung künstlicher Zahnelemente ist es somit auf einfache Weise möglich, insbesondere automatisch zu bestimmen, welches mindestens eine Zahnelement in einer Zahngarnitur fehlt. Das mindestens eine fehlende Zahnelement kann sodann unmittelbar ersetzt werden. Beispielsweise kann dies derart erfolgen, dass das System unmittelbar in der Zahnarztpraxis oder beim Zahntechniker betrieben wird und beispielsweise mit Hilfe eines mobilen Geräts, wie eines Mobiltelefons o.dgl., durchgeführt wird. Mit Hilfe einer entsprechenden Software wird dem Benutzer sodann unmittelbar die Art des mindestens einen fehlenden Zahnelements in eindeutiger Definition mitgeteilt. Die Zahnarztpraxis oder der Zahntechniker können sodann das entsprechende fehlende Zahnelement beim Hersteller bestellen. Dies könnte beispielsweise mit einer entsprechenden Bestellfunktion, die ebenfalls in das Mobilgerät integriert ist, erfolgen.

Alternativ könnte die angebrochene Zahngarnitur auch zum Hersteller zurückgeschickt werden. Die entsprechende Erfassungseinrichtung und eine Bildauswerteeinrichtung des Systems ist beim Hersteller vorhanden, der sodann das mindestens eine fehlende Zahnelement ersetzt und die Zahngarnitur zurückschickt.

Auch sind Kombinationen des Vorgehens möglich, so dass beispielsweise die bildliche/visuelle Erfassung der Zahngarnitur in der Zahnarztpraxis oder beim Zahntechniker erfolgt und das entsprechende Bild ohne Auswertung an den Hersteller übermittelt wird. Der Hersteller wertet das Bild sodann mit mindestens einer Bildauswerteeinrichtung aus und bestimmt die Art der Zahngarnitur und das mindestens eine fehlende Zahnelement. Das mindestens eine fehlende Zahnelement wird sodann in die Zahnarztpraxis bzw. zum Zahntechniker geschickt, der die entsprechende Zahngarnitur somit auf einfache Weise wieder auffüllen kann.

Das System weist eine Bereitstellungseinrichtung auf. Mit einer derartigen Bereitstellungseinrichtung erfolgt vorzugsweise ein automatisches Bereitstellen des als fehlend von der Bildauswerteeinrichtung bestimmten Zahnelements.

In bevorzugter Weiterbildung weist das System eine Datenübertragungseinrichtung auf. Bei der Datenübertragungseinrichtung kann es sich beispielsweise um ein Mobiltelefon handeln, so dass es auf einfache Weise möglich ist, das Mobiltelefon als Erfassungseinrichtung zur bildlichen/visuellen Erfassung der unvollständigen Zahngarnitur zu nutzen und sodann die Bilddaten an die Bildauswerteeinrichtung zu übertragen. Dies ist insbesondere vorteilhaft, wenn die Bildauswerteeinrichtung insbesondere örtlich von der Erfassungseinrichtung getrennt ist, d.h. wenn es sich um ein System handelt, bei dem die Erfassungseinrichtung in der Zahnarztpraxis bzw. beim Zahntechniker vorhanden ist und die Bildauswerteeinrichtung beim Hersteller.

Die Datenübertragungseinrichtung kann auch in ein Gerät wie ein Mobiltelefon integriert sein. Hierbei erfolgt das Übertragen der von der Erfassungseinrichtung wie der Kamera erfassten Daten intern innerhalb des mobilen Gerätes zu der ebenfalls in das mobile Gerät integrierten Bildauswerteeinrichtung. Auch kann die Bildauswerteeinrichtung unabhängig von einem mobilen Gerät in einem Computer integriert sein, so dass die Datenübertragung von der Erfassungseinrichtung kabellos oder kabelgebunden an den Computer erfolgt, der sodann die Bildauswerteeinrichtung aufweist.

Gegebenenfalls weist das erfindungsgemäße System eine weitere Datenübertragungseinrichtung auf. Diese dient zur Übertragung der von der Bildauswerteeinrichtung erzeugten Daten betreffend die Art der Zahngarnitur und/oder des mindestens einen fehlenden Zahnelements an die Bereitstellungseinrichtung. Hierbei kann die Übertragung der entsprechenden Daten unmittelbar oder mittelbar an die Bereitstellungseinrichtung erfolgen. Die Bereitstellungseinrichtung ist üblicherweise beim Hersteller angeordnet und bewirkt eine insbesondere automatische Bereitstellung des mindestens einen fehlenden Zahnelements.

Eine entsprechende Datenübertragungseinrichtung kann auch in bevorzugter Weiterbildung unmittelbar in das mobile Gerät, insbesondere ein Mobiltelefon, integriert sein. Bei einer besonders bevorzugten Ausführungsform des erfindungsgemäßen Systems sind somit die Erfassungseinrichtung, die mindestens eine Bildauswerteeinrichtung und die mindestens eine Datenübertragungseinrichtung in ein Gerät, insbesondere ein Mobiltelefon, integriert. Es kann somit beispielsweise mit der Kamera des Mobiltelefons eine unvollständige Zahngarnitur bildlich/visuell erfasst werden. Anschließend werden die entsprechenden Bilddaten innerhalb des Mobiltelefons an die mindestens eine Bildauswerteeinrichtung zur Bestimmung der Art der Zahngarnitur des mindestens einen fehlenden Zahnelements übermittelt. Die Daten betreffend die Art der Zahngarnitur und/oder des mindestens einen fehlenden Zahnelements werden sodann, insbesondere unmittelbar von dem Mobiltelefon, durch Datenfernübertragung an die beim Hersteller vorhandene Bereitstellungseinrichtung übertragen.

Das erfindungsgemäße Verfahren zur Bereitstellung künstlicher Zahnelemente weist zunächst den Schritt eines bildlichen/visuellen Erfassens von zumindest einer unvollständigen Zahngarnitur auf. Im nächsten Schritt erfolgt das insbesondere automatische Auswerten des erfassten Bildes zur Bestimmung der Art der Zahngarnitur und zur Bestimmung des mindestens einen fehlenden Zahnelements. Sowohl das bildliche/visuelle Erfassen der Zahngarnitur als auch das Auswerten erfolgt in bevorzugter Ausführungsform wie vorstehend anhand des erfindungsmäßen Systems beschrieben.

In dem erfindungsgemäßen Verfahren erfolgt ein Bereitstellen des mindestens einen fehlenden Zahnelements. Dies kann von Hand oder in bevorzugter Weiterbildung durch Verwenden der vorstehend anhand des Systems beschriebenen insbesondere automatischen Bereitstellungseinrichtung erfolgen.

Des Weiteren erfolgt in bevorzugter Weiterbildung des erfindungsgemäßen Verfahrens ein Übertragen der erfassten Bilddaten an eine Bildauswerteeinrichtung, wobei dies vorzugsweise wiederum wie vorstehend anhand des erfindungsgemäßen Systems beschrieben erfolgt.

Bevorzugt ist es des Weiteren, dass die von der Bildauswerteeinrichtung erzeugten Daten betreffend die Zahngarnitur und/oder das mindestens eine fehlende Zahnelement an die Bereitstellungseinrichtung übertragen werden.

Besonders bevorzugt ist es, das Verfahren mittels des vorstehend beschriebenen erfindungsgemäßen Systems bzw. anhand der beschriebenen bevorzugten Weiterbildungen durchzuführen.

Mit Hilfe des erfindungsgemäßen Verfahrens sowie auch des erfindungsgemäßen Systems ist es ferner möglich, erfasste Bilder und die hieraus resultierenden Daten betreffend die Art der Zahngarnitur und des mindestens einen fehlenden Zahnelements miteinander zu vergleichen. Dies kann in bevorzugter Ausführungsform unmittelbar in einem Mobilgerät erfolgen. Für den Vergleich ist es beispielsweise möglich, dem Kunden unmittelbar mitzuteilen, dass in seinem Sortiment zwei identische Zahngarnituren vorhanden sind, in denen jedoch unterschiedliche Zahnelemente fehlen. So ist es möglich, unmittelbar in der Zahnarztpraxis oder im Labor des Zahntechnikers Zahngarnituren aufzufüllen. Es ist sodann nicht erforderlich, die fehlenden Zahnelemente beim Hersteller zu bestellen, sondern zunächst Zahngarnituren unmittelbar aufzufüllen.

Nachfolgend wird die Erfindung anhand einer schematischen vereinfachten Darstellung einer bevorzugten Ausführungsform unter Bezugnahme auf die anliegende Zeichnung näher erläutert.

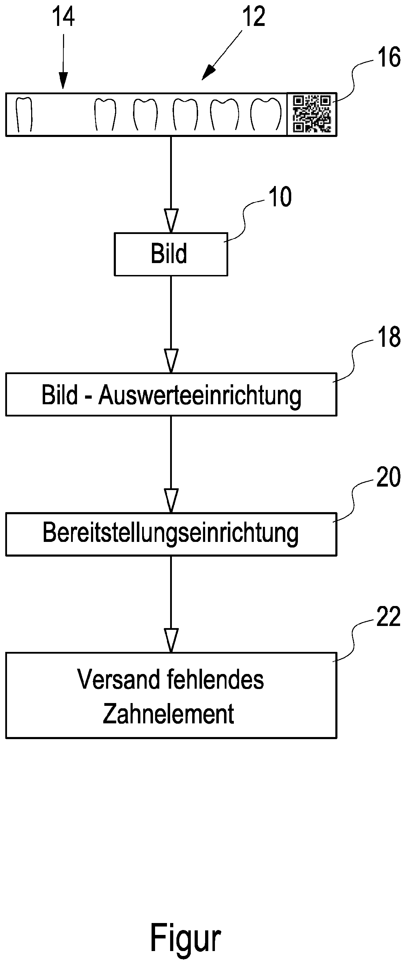

Mit Hilfe einer insbesondere in ein Mobiltelefon integrierten Kamera wird ein Bild 10 einer Zahngarnitur 12 erzeugt. Im dargestellten Ausführungsbeispiel fehlt bei der Zahngarnitur 12 ein Zahnelement 14. Ferner weist die Zahngarnitur 12 zur einfachen Bestimmung der Art der Zahngarnitur einen QR-Code 16 auf.

Das Bild 10 wird an eine vorzugsweise ebenfalls in das Mobiltelefon integrierte Bildauswerteeinrichtung 18 übermittelt. Mit Hilfe der Bildauswerteeinrichtung 18 erfolgt eine insbesondere automatische Auswertung des erstellten Bildes 10 der Zahngarnitur 12, so dass eindeutig bestimmt ist, welches Zahnelement 14 in der Zahngarnitur 12 fehlt. Diese Daten werden sodann an eine insbesondere beim Hersteller angeordnete Bereitstellungseinrichtung 20 übermittelt. Diese Datenübermittlung erfolgt vorzugsweise unmittelbar durch das Mobiltelefon.

Von der in der bevorzugten Ausführungsform ebenfalls automatisch arbeitenden Bereitstellungseinrichtung erfolgt das Bereitstellen des im dargestellten Ausführungsbeispiel fehlenden Zahnelements 14. Das fehlende Zahnelement wird sodann beispielsweise verpackt und, wie in Schritt 22 dargestellt, versendet. Üblicherweise erfolgt hierbei selbstverständlich das Bündeln mehrerer von einem Kunden bestellter Zahnelemente.

## Patentansprüche

1. System zur Bereitstellung künstlicher Zahnelemente, mit
einer Erfassungseinrichtung (10) zur bildlichen/visuellen Erfassung zumindest einer unvollständigen Zahngarnitur (12), wobei die Erfassungseinrichtung (10) ein Bild der Zahngarnitur (12) erzeugt,
einer Bildauswerteeinrichtung (18) zur Bestimmung der Art der Zahngarnitur (12) und zur Bestimmung des mindestens einen fehlenden Zahnelements (14) und
einer das mindestens eine von der Bildauswerteeinrichtung (18) als fehlend bestimmte Zahnelement (14) bereitstellende Bereitstellungseinrichtung (20).

2. System nach Anspruch 1, **dadurch gekennzeichnet, dass** zur Bestimmung der Art der Zahngarnitur (12) und zur Bestimmung des mindestens einen fehlenden Zahnelements zwei unterschiedliche Bildauswerteeinrichtungen vorgesehen sind.

3. System nach Anspruch 1 oder 2, **gekennzeichnet durch** eine Datenübertragungseinrichtung zur Übertragung der von der Erfassungseinrichtung (10) erzeugten Bilddaten an die Bildauswerteeinrichtung (18).

4. System nach einem der Ansprüche 1 bis 3 , **gekennzeichnet durch** eine ggf. weitere Datenübertragungseinrichtung zur Übertragung der von der Bildauswerteeinrichtung (18) erzeugten Daten betreffend die Art der Zahngarnitur (12) und/oder das mindestens eine fehlende Zahnelement (14) an die Bereitstellungseinrichtung (20).

5. System nach einem der Ansprüche 1 bis 4, **dadurch gekennzeichnet, dass** die Erfassungseinrichtung (10) eine Kamera aufweist.

6. Verfahren zur Bereitstellung künstlicher Zahnelemente, unter Verwendung des Systems nach Anspruch 1, mit den Schritten:
- bildliches/visuelles Erfassen von zumindest einer unvollständigen Zahngarnitur (12)
- Auswerten des erfassten Bildes zur Bestimmung der Art der Zahngarnitur (12) und zur Bestimmung des mindestens einen fehlenden Zahnelements (14) und
- Bereitstellen des mindestens einen fehlenden Zahnelements (14).

7. Verfahren nach Anspruch 6, wobei zum Bestimmen der Art der Zahngarnitur (12) und zur Bestimmung des mindestens einen fehlenden Zahnelements zwei unterschiedliche Bildauswerteeinrichtungen verwendet werden.

8. Verfahren nach Anspruch 6 oder 7 , mit dem zusätzlichen Schritt:
Übertragen der erfassten Bilddaten an eine Bildauswerteeinrichtung (18).

9. Verfahren nach Anspruch 8, mit dem zusätzlichen Schritt:
Übertragen der von der Bildauswerteeinrichtung (18) erzeugten Daten betreffend die Zahngarnitur (12) und/oder das mindestens eine fehlende Zahnelement (14) an die Bereitstellungseinrichtung (20).

10. Verfahren nach einem der An- sprüche 6 bis 9, wobei zur Durchführung des Verfahrens ein System nach einem der Ansprüche 1 bis 5 verwendet wird.

## Claims

1. A system for providing artificial tooth elements, comprising
a detection device (10) for figurative/visual detection of at least one incomplete tooth set (12), wherein the detection device (10) generates an image of the tooth set (12),
an image evaluation device (18) for determining the type of tooth set (12) and for determining the at least one missing tooth element (14), and
a provision device (20) providing the at least one tooth element (14) determined as missing by the image evaluation device (18).

2. The system according to claim 1, **characterized in that** two different image evaluation devices are provided for determining the type of tooth set (12) and for determining the at least one missing tooth element.

3. The system according to claim 1 or 2, **characterized by** a data transmission device for transmitting the image data generated by the detection device (10) to the image evaluation device (18).

4. The system according to any one of claims 1 to 3, **characterized by** any further data transmission device, if required, for transmitting the data generated by the image evaluation device (18) relating to the type of tooth set (12) and/or the at least one missing tooth element (14) to the provision device (20).

5. The system according to any one of claims 1 to 4, **characterized in that** the detection device (10) comprises a camera.

6. A method for providing artificial tooth elements by using the system according to claim 1, comprising the following steps:
- figurative/visual detection of at least one incomplete tooth set (12),
- evaluating the detected image for determining the type of tooth set (12) and for determining the at least one missing tooth element (14), and
- providing the at least one missing tooth element (14).

7. The method according to claim 6, wherein two different image evaluation devices are used for determining the type of tooth set (12) and for determining the at least one missing tooth element.

8. The method according to claim 6 or 7, comprising the following additional step:
transmitting the detected image data to an image evaluation device (18).

9. The method according to claim 8, comprising the following additional step:
transmitting the data generated by the image evaluation device (18) relating to the tooth set (12) and/or the at least one missing tooth element (14) to the provision device (20).

10. The method according to any one of claims 6 to 9, wherein a system according to any one of claims 1 to 5 is used for performing the method.

## Revendications

1. Système de fourniture d'éléments dentaires artificiels, doté
d'un dispositif de détection (10) destiné à imager/détecter visuellement au moins une garniture de dents incomplète (12), dans lequel le dispositif de détection (10) génère une image de la garniture dentaire (12),
d'un dispositif d'analyse d'image (18) destiné à la détermination du type de la garniture dentaire (12) et à la détermination de l'au moins un élément dentaire manquant (12) et
d'un dispositif de fourniture (20) fournissant l'au moins un élément dentaire (14) déterminé comme manquant par le dispositif d'analyse d'image (18).

2. Système selon la revendication 1, **caractérisé en ce que** deux dispositifs d'analyse d'image différents sont prévus pour la détermination du type de garniture dentaire (12) et pour la détermination de l'au moins un élément dentaire manquant.

3. Système selon la revendication 1 ou 2, **caractérisé par** un dispositif de transmission de données destiné à transmettre au dispositif d'analyse d'image (18) les données d'image générées par le dispositif de détection (10).

4. Système selon l'une des revendications 1 à 3, **caractérisé par** un éventuel dispositif de transmission de données supplémentaire destiné à transmettre au dispositif de fourniture (20) les données d'image générées par le dispositif d'analyse d'image (18) concernant le type de garniture dentaire (12) et/ou l'au moins un élément dentaire manquant (14).

5. Système selon l'une des revendications 1 à 4, **caractérisé en ce que** le dispositif de détection (10) comporte une caméra.

6. Procédé de fourniture d'éléments dentaires artificiels, utilisant le système selon la revendication 1, avec les étapes :
- imagerie/détection visuelle d'au moins une garniture dentaire incomplète (12)
- analyse de l'image détectée afin de déterminer le type de la garniture dentaire (12) et de déterminer l'au moins un élément dentaire manquant (12) et
- fourniture de l'au moins un élément dentaire manquant (14).

7. Procédé selon la revendication 6, dans lequel deux dispositifs d'analyse d'image différents sont utilisés pour déterminer le type de garniture dentaire (12) et pour déterminer l'au moins un élément dentaire manquant.

8. Procédé selon la revendication 6 ou 7, avec l'étape supplémentaire :
transmission des données d'image détectées à un dispositif d'analyse d'image (18).

9. Procédé selon la revendication 8, avec l'étape supplémentaire :
transmission au dispositif de fourniture (20) des données d'image générées par le dispositif d'analyse d'image (18) concernant le type de garniture dentaire (12) et/ou l'au moins un élément dentaire manquant (14).

10. Procédé selon l'une des revendications 6 à 9, dans lequel un système selon l'une des revendications 1 à 5 est utilisé pour la mise en œuvre du procédé.
